# EUROPÄISCHE PATENTANMELDUNG

(11) **EP 4 329 168 A1**
(43) Veröffentlichungstag der Anmeldung: **28.02.2024**
(21) Anmeldenummer: 22191708.1
(22) Anmeldetag: 23.08.2022
(51) Int. Cl.: H02M 1/00, H02M 1/14

(54) **REGLERSCHALTUNG**

(71) Anmelder: Siemens Aktiengesellschaft, 80333 München (DE)
(72) Erfinder: Hallak, Jalal, 1220 Wien (AT)
(74) Vertreter: Siemens Patent Attorneys

(57) **Zusammenfassung**

Die Erfindung betrifft eine Reglerschaltung, insbesondere für Schaltnetzteile, mit einem gegengekoppelten Differenzverstärker, wobei die Gegenkopplung einen Spannungsteiler aus Widerständen und zumindest einem Kondensator zwischen einem Signaleingang und dem Ausgang der Reglerschaltung in der Weise umfasst, dass die Übertragungsfunktion einem PI-Regler entspricht, bei der eine schaltbare Spannungsquelle vorgesehen ist, deren Ausgänge mit einem Bezugspotential und dem ausgangsseitigen Anschluss des Kondensators verbunden sind, bei der weiterhin eine Schwellwertschaltung in der Weise vorgesehen ist, dass bei Überschreiten eines ersten vorgegebenen Spannungswertes der Ausgangsspannung und bei Unterschreiten eines zweiten vorgegebenen Spannungswertes der Ausgangsspannung die Spannungsquelle zugeschaltet wird.

## Beschreibung

Die Erfindung betrifft eine Reglerschaltung, insbesondere für ein Schaltnetzteil.

Zur Regelung der Ausgangsspannung auf einen vorgegebenen Sollwert ist bei üblichen Schaltnetzteilen eine Reglerschaltung, beispielsweise ein sogenannter PI-Regler vorgesehen, welche eine aktuelle Ausgangsspannung mit dem vorgegebenen Sollwert vergleicht und daraus eine Stellgröße erzeugt. Aus der Stellgröße der Reglerschaltung werden zur Regelung der Ausgangsspannung beispielsweise mittels PWM-Controller, d.h. Steuerungs-IC's Steuersignale für die taktenden Schaltelemente auf der Primärseite des Resonanzwandlers abgeleitet.

Herkömmliche, reale PI-Regler weisen beim Einsatz in Schaltnetzteilen aufgrund von parasitären Eigenschaften Nachteile bei den klassischen Störungsfällen Netzunterbrechung und Rückspeisung auf, die sich insbesondere als Überschwingen der Ausgangsspannung äußern.

Der Erfindung liegt daher die Aufgabe zugrunde, eine Reglerschaltung mit verbessertem Regelverhalten bei Störungsfällen anzugeben.

Erfindungsgemäß geschieht dies mit einer Reglerschaltung gemäß Anspruch 1.

Vorteilhafte Ausgestaltungen der Erfindung werden in den Unteransprüchen beschrieben.

Die Erfindung wird anhand von Figuren näher erläutert.

Es zeigen beispielhaft:
Fig. 1 schematisch eine erfindungsgemäße Reglerschaltung
Fig. 2 eine erste Ausführungsform der Reglerschaltung
Fig. 3 eine zweite Ausführungsform der Reglerschaltung
Fig. 4 Teile eines Schaltnetzteiles mit Impedanzwandler

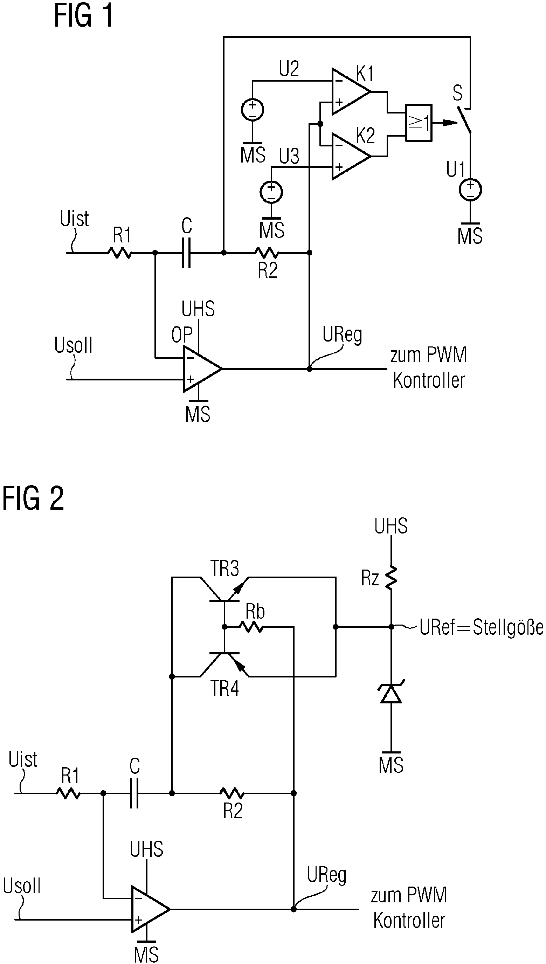

Die Reglerschaltung gemäß Fig. 1 umfasst einen Operationsverstärker OP, der als gegengekoppelter Differenzverstärker geschaltet ist, wobei die Gegenkopplung einen Spannungsteiler aus zwei Widerständen R1, R2 und einem Kondensator C zwischen den beiden Widerständen umfasst. Der Spanungsteiler ist zwischen einen Signaleingang Uᵢₛₜ und den Ausgang der Reglerschaltung eingefügt und der gemeinsame Anschluss von erstem Widerstand R1 und Kondensator C ist mit dem negativen Eingang des Operationsverstärkers OP verbunden, während an den positiven Eingang des Operationsverstärkers OP ein Spannungssollwert Uₛₒₗₗ angelegt wird. Aufgrund dieser Beschaltung entspricht die Übertragungsfunktion der Reglerschaltung einem PI-Regler.

Erfindungsgemäß wird diese herkömmliche Reglerschaltung um eine schaltbare bzw. zuschaltbare Spannungsquelle U1 ergänzt, deren Wert annähernd der Stellgröße der OP-Ausgangsspannung in einem typischen Arbeitspunkt des stationären Betriebes entspricht, Die Ausgänge der Spannungsquelle sind mit einem Bezugspotential MS und dem ausgangsseitigen Anschluss des Kondensators C verbunden. Die Spannungsquelle U1 weist dabei einen im Verhältnis zu den Strömen durch die Widerstände R1 & R2 sehr geringe Impedanz auf und wirkt sowohl als Quelle als auch als Senke mit im Wesentlichen konstanter Spannung. Der Schalter S der Spannungsquelle wird von einer Schwellwertschaltung in der Weise gesteuert, dass bei Überschreiten eines ersten vorgegebenen Spannungswertes U₂ der Ausgangsspannung und bei Unterschreiten eines zweiten vorgegebenen Spannungswertes U₃ der Ausgangsspannung die Spannungsquelle U₁ zugeschaltet wird.

Durch die Zuschaltung der Spannungsquellen wird eine Entladung des Kondensators C bei einem Ausfall der Versorgungsspannung bzw. Überladung bei Überlast durch Rückspeisung verhindert und bei Wegfall der Störung ein rascher und nahezu schwingungsfreier Übergang des Reglers in den Normalbetrieb gewährleistet. Die Umladung des Kondensators bis zu einer Versorgungsgrenze des Operationsverstärkers (allgemein als Sättigung bekannt) wird in den Fällen verhindert, in denen der Regler mit seinem Ausgangssignal den balancierten Regelzustand ohnehin nicht herstellen kann.

Die Schwellwertschaltung umfasst einen zweiten und einen dritten Differenzverstärker K1, K2, wobei der negative Eingang des zweiten Differenzverstärkers K1 mit einer zweiten Referenzspannungsquelle U2 und der positive Eingang des dritten Differenzverstärkers mit einer dritten Referenzspannungsquelle U3 verbunden ist, der positive Eingang des zweiten Differenzverstärkers K1 und der negative Eingang des dritten Differenzverstärkers K2 miteinander und mit dem Ausgang der Reglerschaltung verbunden sind. Die Ausgänge des zweiten Differenzverstärkers K1 und des dritten Differenzverstärkers K2 sind an die Eingänge eines ODER-Gliedes geführt, dessen Ausgang die schaltbare Spannungsquelle U1 oder einen bidirektional stromführenden Schalter, der die Spannungsquelle mit der Regelschaltung verbindet, ansteuert.

Zweiter Differenzverstärker K1 und dritter Differenzverstärkers K2 können beispielsweise mittels Operationsverstärkern aufgebaut werden.

Eine besonders vorteilhafte Realisierungsvariante von Schwellwertschaltung und schaltbarer Spannungsquelle ist aus Fig. 2 ersichtlich. Bei dieser Ausführungsform umfasst die Schwellwertschaltung zwei Transistoren TR3, TR4 in Gegentaktschaltung, deren gemeinsamer Kollektoranschluß mit dem ausgangsseitigen Anschluss des Kondensators C verbunden ist.

Der gemeinsame Basisanschluss ist über einen Basiswiderstand R_{b} mit dem Ausgang der Reglerschaltung verbunden. Der gemeinsame Emitteranschluß ist mit der schaltbaren bzw. zuschaltbaren Spannungsquelle verbunden, welche aus einem Spannungsteiler mit Vorwiderstand R_{z} und Zenerdiode Z gebildet ist.

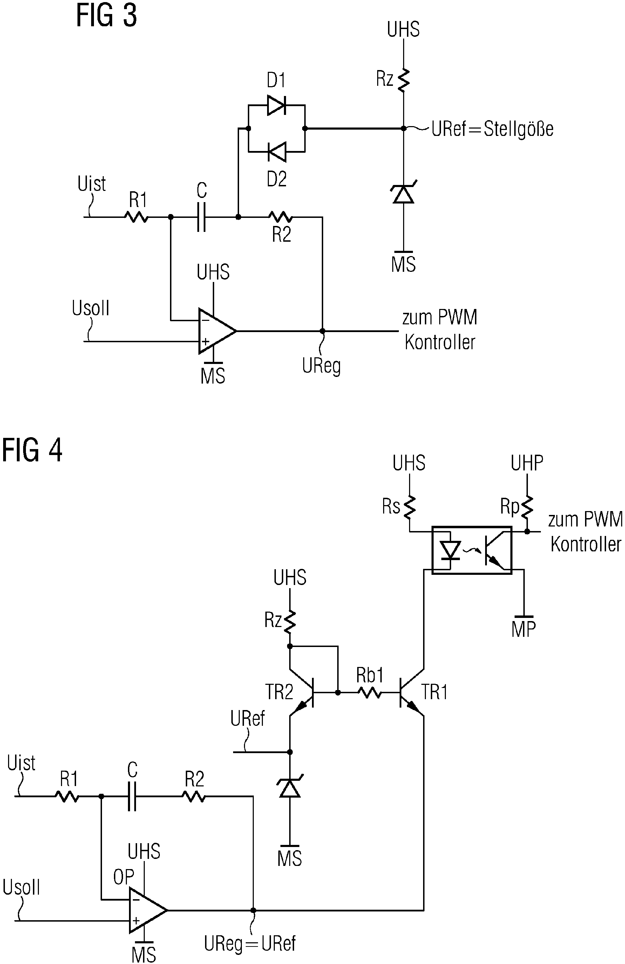

Wie in Fig. 3 dargestellt, kann die Schwellwertschaltung auch mittels zwei gegenparallel geschalteten Dioden D1, D2 aufgebaut sein. Damit ist eine weitere einfache Realisierungsmöglichkeit gegeben.

Die Vorteile der erfindungsgemäßen Reglerschaltung kommen besonders bei einem Einsatz in einem Schaltnetzteil zum Tragen.

Bei diesem Einsatz kann es vorteilhaft sein, wenn zwischen die Reglerschaltung und einen PWM- Controler ein Impedanzwandler und ein Optokoppler eingefügt sind.

Durch Hinzufügen eines Impedanzwandlers am Ausgang eines Operationsverstärker kann einerseits der Frequenzgang des Operationsverstärkers und die dynamische Verstärkung der Übertragungsstrecke erhöht werden, ohne dass die Grenzfrequenz des Reglers nachteilig beeinflusst wird und andererseits wird die Ausgangsspannung des OP-Regler in den meisten Arbeitspunkten auf dem Spannungsniveau der Referenzspannung des Impedanzwandlers eingehalten und dadurch wird durch Temperatur-Drift und Lastwechseln nicht beeinflusst werden.

Nach dem Ausführungsbeispiel gemäß Fig. 4 kann der Impedanzwandler in vorteilhafter Weise eine erste Serienschaltung aus Kollektorwiderstand R_{z}, zweitem Transistor TR2 und zweiter Zenerdiode Z2 und eine zweite Serienschaltung aus einem weiteren Kollektorwiderstand Rs, Last und erstem Transistor TR1 umfassen, wobei die Basisanschlüsse von zweitem und erstem Transistor TR1, TR2 über einen weiteren Widerstand Rb1 miteinander verbunden sind und die Basis und der Kollektor des zweiten Transistors TR2 miteinander verbunden sind.

Der Impedanzwandler hat dabei u.a. die Aufgabe die Ausgangsspannung des Operationsverstärkers in einen Strom zur Ansteuerung des Optokopplers zu wandeln und damit eine hohe Verstärkung der Regelschleife zu erzielen gleichzeitig bleibt die Ausgangsspannung des OPV in den meisten Arbeitspunkten auf dem Niveau der Referenzspannung des Impedanzwandlers.

### Bezugszeichenliste

- OP: Operationsverstärker
- R1, R2, Rb, Rs, Rp, Rz: Widerstände
- C: Kondensator
- Uist: Signaleingang
- Usoll: Spannungssollwert
- Ureg: Ausgangsspannung
- U1: schaltbare Spannungsquelle
- U2,U3: vorgegebene Spannungswerte
- K1, K2: Differenzverstärker
- ≥1: ODER-Glied
- S: Schalter
- Z, Z2: Zenerdioden
- TR1, TR2, TR3, TR4: Transistoren
- D1, D2: Dioden

## Patentansprüche

1. Reglerschaltung, insbesondere für Schaltnetzteile, mit einem gegengekoppelten Differenzverstärker, wobei die Gegenkopplung einen Spannungsteiler aus Widerständen und zumindest einem Kondensator zwischen einem Signaleingang und dem Ausgang der Reglerschaltung in der Weise umfasst, dass die Übertragungsfunktion einem PI-Regler entspricht, **dadurch gekennzeichnet, dass** der Kondensator (C) durch eine ergänzende Schaltung in der Weise angesteuert wird, dass bei nicht ausregelbarer Störung der Strecke der Kondensator (C) nicht vollständig entladen wird, sondern annähernd auf dem Potential mindestens eines Arbeitspunktes verbleibt, den er im ausgeregelten Normalbetrieb aufweist.

2. Reglerschaltung nach Anspruch 1, **dadurch gekennzeichnet, dass** das ausgangsseitige Kondensator-Ende über aktive Schalter an eine vorbestimmte Spannungsquelle (U1) geschaltet wird und dort festgehalten wird bis die Störung abgeklungen ist und eine Ausregelung wieder möglich ist, wobei die Spannungsquelle (U1) im Wesentlichen die Spannung aufweist, die dem Potential des Kondensator-Anschlusses in mindestens einem Arbeitspunkt entspricht.

3. Reglerschaltung nach Anspruch 1, **dadurch gekennzeichnet, dass** der Kondensator (C) in eine Regelschaltung in der Art eingebunden ist, dass die Regelung der Strecke über eine Änderung des Stromes durch einen Operationsverstärker (OP) geregelt wird und daher das Potential des ausgangsseitigen Kondensatoranschlusses schaltungsbedingt im Wesentlichen auf einer Spannung verbleibt.

4. Reglerschaltung, insbesondere für Schaltnetzteile, mit einem gegengekoppelten Differenzverstärker, wobei die Gegenkopplung einen Spannungsteiler aus Widerständen und zumindest einem Kondensator zwischen einem Signaleingang und dem Ausgang der Reglerschaltung in der Weise umfasst, dass die Übertragungsfunktion einem PI-Regler entspricht, **dadurch gekennzeichnet, dass** eine schaltbare Spannungsquelle (U1) vorgesehen ist, deren Ausgänge mit einem Bezugspotential und dem ausgangsseitigen Anschluss des Kondensators (C) verbunden sind, dass weiterhin eine Schwellwertschaltung (K1, K2) in der Weise vorgesehen ist, dass bei Überschreiten eines ersten vorgegebenen Spannungswertes der Ausgangsspannung (U2) und bei Unterschreiten eines zweiten vorgegebenen Spannungswertes (U3) der Ausgangsspannung die Spannungsquelle (U1) zugeschaltet wird sodass der Kondensator-Anschluss im Wesentlichen auf der Spannung der schaltbaren Spannungsquelle (U1) gehalten wird.

5. Reglerschaltung nach Anspruch 1, **dadurch gekennzeichnet, dass** die Schwellwertschaltung einen zweiten und einen dritten Differenzverstärker (K1, K2) umfasst, dass der negative Eingang des zweiten Differenzverstärkers (K1) mit einer ersten Referenzspannungsquelle (U2) und der positive Eingang des dritten Differenzverstärkers (K2) mit einer zweiten Referenzspannungsquelle (U3)verbunden ist, dass weiterhin der positive Eingang des zweiten Differenzverstärkers (K1) und der negative Eingang des dritten Differenzverstärkers (K2) miteinander und mit dem Ausgang der Reglerschaltung verbunden sind und dass die Ausgänge des zweiten Differenzverstärkers und des dritten Differenzverstärkers an die Eingänge eines ODER-Gliedes geführt sind, dessen Ausgang die schaltbare Spannungsquelle (U1) ansteuert.

6. Reglerschaltung nach Anspruch 1, **dadurch gekennzeichnet, dass** die Schwellwertschaltung zwei Transistoren (TR3, TR4) in Gegentaktschaltung umfasst, deren gemeinsamer Kollektoranschluß mit dem ausgangsseitigen Anschluss des Kondensators (C) verbunden ist, dass der gemeinsame Basisanschluss über einen Widerstand (Rb) mit dem Ausgang der Reglerschaltung und dass der gemeinsame Emitteranschluß mit der schaltbaren Spannungsquelle (U1) verbunden ist, welche aus einem Spannungsteiler mit Widerstand (Rz) und Zenerdiode (Z) gebildet ist.

7. Reglerschaltung nach Anspruch 1, **dadurch gekennzeichnet, dass** die Schwellwertschaltung zwei gegenparallel geschaltete Dioden (D1,D2) umfasst.

8. Schaltnetzteil, **dadurch gekennzeichnet, dass** eine Reglerschaltung nach einem der Ansprüche 1 bis 4 vorgesehen ist.

9. Schaltnetzteil nach Anspruch 5, **dadurch gekennzeichnet, dass** zwischen die Reglerschaltung und einen PWM- Controller ein Impedanzwandler und ein Widerstand oder eine Stromquelle eingefügt ist, die zu einer sich ändernden Signalspannung führen, welche direkt in die Regelstufe geleitet wird oder über einen Optokoppler oder ein anderes isolierendes Signalübertragungsmedium.

10. Schaltnetzteil nach Anspruch 6, **dadurch gekennzeichnet, dass** der Impedanzwandler eine erste Serienschaltung aus Kollektorwiderstand (Rs), zweitem Transistor (TR2) und Zenerdiode (Z2) umfasst, dass eine zweite Serienschaltung aus Kollektorwiderstand (Rs) , Last und erstem Transistor (TR1)vorgesehen ist und dass die Basisanschlüsse von zweitem und erstem Transistor (TR2, TR1) über einen Widerstand (Rb1) miteinander verbunden sind und Basis und Kollektor des zweiten Transistors (TR2) miteinander verbunden sind.
